# EUROPEAN PATENT APPLICATION

(11) **EP 1 238 957 A1**
(43) Date of publication of application: **11.09.2002**
(21) Application number: 01830124.2
(22) Date of filing: 22.02.2001
(51) Int. Cl.: C04B 38/00, C04B 26/02, C04B 20/00

(54) **A process for mixing resin with inert powders having different granulometries yielding a concrete mixture**

(71) Applicant: Compasso S.r.l., 42011 Bagnolo in Piano, Reggio Emilia (IT)
(72) Inventor: Stabellini, Paolo, 41034 Finale Emilia, Modena (IT); Sgarbi, Sandro, 42100 Reggio Emilia (IT)
(74) Representative: Gotra, Stefano

(57) **Abstract**

The invention is especially suitable for manufacturing products for external channels for removal of rainwater, and includes the following steps: in a mixer, mixing inert powders (I₁, I₂, C) of different granulometries together according to predetermined percentages, to obtain a solid mixture; adding to the solid mixture a predetermined quantity of liquid polyester resin (R) at a temperature comprised between 15°C and 70°C, to obtain a damp mixture; adding to the damp mixture the following additives: ethyl acetate (A₁), methyl ethyl ketone peroxide in dimethyl phthalate (A₂), mineral oil (A₃), cobalt octoate (A₄); to obtain a mixture which will form the product (P) in a mold (S) supplied by an extruder (E). The invention enables manufacture of a considerable number of products per unit of time.

## Description

Specifically, though not exclusively, the invention can be used in the construction sector for manufacturing internal channelling for liquids of various types as well as external channelling, mostly used for removing rainwater from streets, squares, car parks, courtyards, gardens etc. The invention also relates to the manufacture of accessories normally associated with these channels, such as for example water collection tanks.

The invention can also be advantageously used for the manufacture of other types of products, such as wash basins, sanitary appliances, and other products destined to contain or transport water or other liquids.

Transport channels for drainage of rainwater from roads normally comprise concrete blocks or the like which are associated one to another during laying. Concrete channels, though advantageously solid and sturdy, a requisite for drainage of rainwater, exhibit several drawbacks. Included among these are the fact that the blocks are slow to manufacture, have a limited resistance to chemical attack, are considerably thick and heavy, are not highly resistant to frost, are porous and absorb high quantities of water, and are rough on the surface.

The main aim of the present invention is to provide a manufacturing process whereby the above-mentioned drawbacks are obviated.

An advantage of the process of the invention is its relatively rapid production time, giving high production rate per time unit.

A further advantage is that the products offer high resistance to chemical attack.

A further advantage of the invention is that the manufactured products are of low thickness and weight while at the same time they offer suitable solidity and sturdiness for their designated task as channelling for rainwater.

Further advantages are their strong resistance to liquid absorption and good antifrost characteristics.

A still further advantage is that the surfaces of the products are very smooth and flow rate is therefore increased.

These aims and advantages and more besides are all attained by the object of the invention, as it is characterised in the appended claims.

Further characteristics and advantages of the present invention will better emerge from the detailed description that follows of a preferred but non-exclusive embodiment of the invention, illustrated purely by way of a nonlimiting example in the accompanying figures of the drawings, in which:

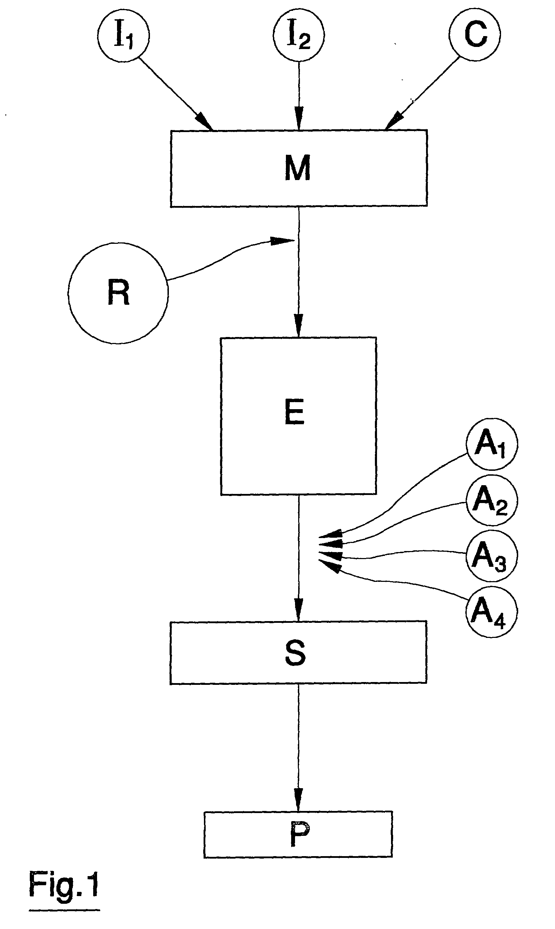

figure 1 is a block diagram mapping a process for manufacturing products, especially for the collection and transport of liquids, made according to the invention.

With reference to the figure of the drawing, I₁ and I₂ denote two predetermined quantities of loose materials, constituted by inert powder materials, preferably sand, having different granulometries; C denotes a predetermined quantity of a third inert material, constituted by calcium carbonate in the form of a very fine powder (filler); M denotes a mixer for powder materials; R a predetermined quantity of polyester resin; A₁, A₂ A₃ and A₄ denote predetermined quantities of four different additives, respectively: ethyl acetate, methyl ethyl ketone peroxide in dimethyl phthalate, mineral oil, cobalt octoate (metallic cobalt in a xylene solution); E denotes an extruder for dropping a mixture into a mold S.

According to the process of the invention, the inert powders I₁ and I₂ with different granulometries are mixed up together by a mixer M in predetermined percentage quantities, obtaining a solid mixture of loose materials. A predetermined quantity of liquid resin R is added to the mixture at a temperature comprised between 15°C and 70°C, to obtain a damp mixture to which additives A₁, A₂ A₃ and A₄ are added to obtain a final mixture which then goes to form the product, preferably by dropping into a mold S which is supplied with mixture by the extruder E.

Additives A₁, A₂ A₃ and A₄ are added to the damp mixture in the continuous extruder E downstream of the introduction of the resin R and immediately before the dropping of the mix into the mold S.

The first inert powder I₁ has a granulometry comprised between 0.1 mm. and 0.3 mm. and constitutes a percentage of between 20% and 40% of the mixture. The second inert powder I₂ has a granulometry comprised between 0.8 mm. and 5.0 mm. and constitutes a percentage of between 25% and 45% of the mixture. The very fine third inert powder (filler) constitutes about 12% to 25% of the mixture. The resin R constitutes from 9% to 20% of the mixture. The resin R is preferably a polyester resin with a styrene content of less than 30%. Additives A₁, A₂ A₃ and A₄ are added to the mixture at percentages comprised between 1% and 3%.

In an embodiment of the invention, the composition of the mixture, expressed in percentage weight, is as follows: 30% of the first inert powder I₁; 35% of the second inert powder I₂; 18.5% of the third inert powder C; 15.5% of resin R; 2% of additives A₁, A₂ A₃ and A₄.

Additive A₂ is methyl ethyl ketone in solution, preferably 33%, of dimethyl phthalate. Additive A₁ is cobalt octoate in a percentage comprised between 4% and 12% of metallic cobalt in a xylene solution. Additive A₁ (cobalt octoate) is present in a percentage comprised between 10% and 35% of the total of additives.

The mixture is dropped into the mold S at a temperature comprised between 30 and 50°C. It has been observed that product hardening time is less than one minute for products having thicknesses comprised between 0.5 and 5.0 centimetres. The mold S is preferably rotary and operatively associable with a continuous extruder E. Production speed is therefore very fast.

After hardening, a workpiece P is extracted from the mold; this can be advantageously used as a channel for realising a channelling for removal of rainwater as well as other liquids. Using appropriate molds it is possible to create other pieces connected with channelling, such as rain vats or tanks.

## Claims

1. A process for manufacturing products, in particular products for collecting and transporting liquids, **characterised in that** it comprises the following steps:
mixing inert powders (I₁, I₂, C) of different granulometries together according to predetermined percentages, to obtain a solid mixture;
adding to the solid mixture a predetermined quantity of liquid resin (R) at a temperature comprised between 15°C and 70°C, to obtain a damp mixture;
adding to the damp mixture at least one from among the following additives: ethyl acetate (A₁), methyl ethyl ketone peroxide in dimethyl phthalate (A₂), mineral oil (A₃), cobalt octoate (A₄); to obtain a mixture which will form the product (P).

2. The process of claim 1, **characterised in that** the inert powders comprise:
a first inert powder (I₁) having granulometry comprised between 0.1 mm and 0.3 mm and being present at a percentage of between 20% and 40% in the forming mixture, a second inert powder (I₂) with granulometry comprised between 0.8 mm and 5.0 mm and being present in a percentage of from 25% to 45% in the forming mixture; and a third inert powder (C) which is very fine and which is present at a percentage of from 12 % to 25% in the forming mixture.

3. The process of claim 2, **characterised in that** the first and the second inert powders (I₁ and I₂) are sands of different granulometries and the third inert powder (C) is calcium carbonate.

4. The process of any one of the preceding claims, **characterised in that** the resin (R) is comprised in the forming mixture at a percentage of from 9% to 20%.

5. The process of any one of the preceding claims, **characterised in that** the resin (R) is a polyester resin with a styrene component of less than 30%.

6. The process of any one of the preceding claims, **characterised in that** the additives (A₁, A₂ A₃ and A₄) are added at percentages comprised between 1% and 3% in the forming mixture.

7. The process of any one of the preceding claims, **characterised in that** the methyl ethyl ketone peroxide (A₂) is in a solution, preferably a 33% solution of dimethyl phthalate.

8. The process of any one of the preceding claims, **characterised in that** the cobalt octoate (A₄) is in a percentage comprised between 4% and 12% of metallic cobalt in xylene solution.

9. The process of any one of the preceding claims, **characterised in that** the cobalt octoate (A₄) is present in a percentage of from 10% to 35% of a total of the additives.

10. The process of any one of the preceding claims, **characterised in that** the additives (A₁, A₂ A₃ and A₄) are added to the damp mixture in a continuous extruder (E) downstream of the introduction of the resin (R) and immediately before the mixture is dropped into a mold (S).

11. The process of any one of the preceding claims, **characterised in that** the damp mixture is prepared by a discontinuous mixer before being put in the continuous extruder (E), where the additives (A₁, A₂ A₃ and A₄) are added immediately before the mixture is dropped into the mold (S).
